# EUROPEAN PATENT SPECIFICATION

(11) **EP 0 789 994 B1**
(45) Date of publication and mention of the grant of the patent: **30.10.2002**
(21) Application number: 97200414.7
(22) Date of filing: 13.02.1997
(51) Int. Cl.: A01F 29/20

(54) **Forage harvester knife and mounting apparatus**
Messertrommel eines Feldhäckslers und Montagevorrichtung
Cylindre de coupe de récolteuse de fourrage et dispositif de montage

(30) Priority: 15.02.1996 US 11681; 15.02.1996 US 11682; 16.01.1997 US 782693; 16.01.1997 US 782691
(43) Date of publication of application: 20.08.1997
(73) Proprietor: NEW HOLLAND BELGIUM N.V., B-8210 Zedelgem (BE)
(72) Inventor: Wagstaff, Robert A., Lancaster, PA 17601 (US)
(74) Representative: Vandenbroucke, Alberic

(56) References cited:
- DE-U- 8 813 953
- FR-A- 2 554 309
- GB-A- 2 161 065
- US-A- 3 378 053
- US-A- 3 873 038
- US-A- 4 061 284
- US-A- 4 209 137
- US-A- 4 257 566

## Description

The present invention relates generally to forage harvesters and more particularly to a new knife design and associated knife mounting apparatus for a harvester cutterhead unit having a segmented knife configuration. This new design also facilitates converting a forage harvester cutterhead unit from a segmented knife configuration to a spiral knife configuration and vice versa.

A typical forage harvester operates in a field to process windrowed or standing forage crop and includes a mobile base unit that is either self propelled or pulled by a tractor. A header, attached to the base unit, either cuts standing crop material such as corn or picks up windrowed crop material such as hay and feeds such crop material rearwardly. The base unit includes a forwardly located generally rectangular inlet opening adjacent the header for receiving crop material from the attachment. A feeding assembly spans the width of the inlet opening for conveying material fed into the base unit to a cutting assembly that chops it into pieces appropriately sized for feeding to livestock. Also included on the base unit are means for transferring the chopped crop material to a vehicle that transports it from the field to a remote location where it is delivered to a storage facility, such as a silo.

Prior art cutting assemblies typically consist of a rotating cutterhead on which knives are mounted for travel through a cylindrical path, and a fixed knife mounted adjacent the path of the moving knives. The feeding assembly usually comprises one or more pairs of opposing counter-rotating rolls for feeding a mat of crop material across a flat face surface of the fixed knife, commonly referred to as a shear bar, operatively associated with cutting edges on the moving knives. The face surface is in an imaginary radial plane extending outwardly from the axis about which the cutterhead rotates to optimize the shearing action of the knives. As crop material is fed, it is chopped into lengths determined by the relationship of the feed rate of the feed rolls to the rotational speed of the cutterhead.

One known type of cutterhead consists of a plurality of spiral knives mounted on a series of side by side axially spaced disc shaped members. Exemplary structure of this nature is shown in US-A-4,209,137. FIGS. 1 and 2 of this patent are identified as prior art and presented in this application as FIGS. 3 and 4. Other examples of prior art forage harvesters having spiral knives mounted via a plurality of spaced disc shaped plates are disclosed in US-A-3,958,766 and US-A-3,873,038.

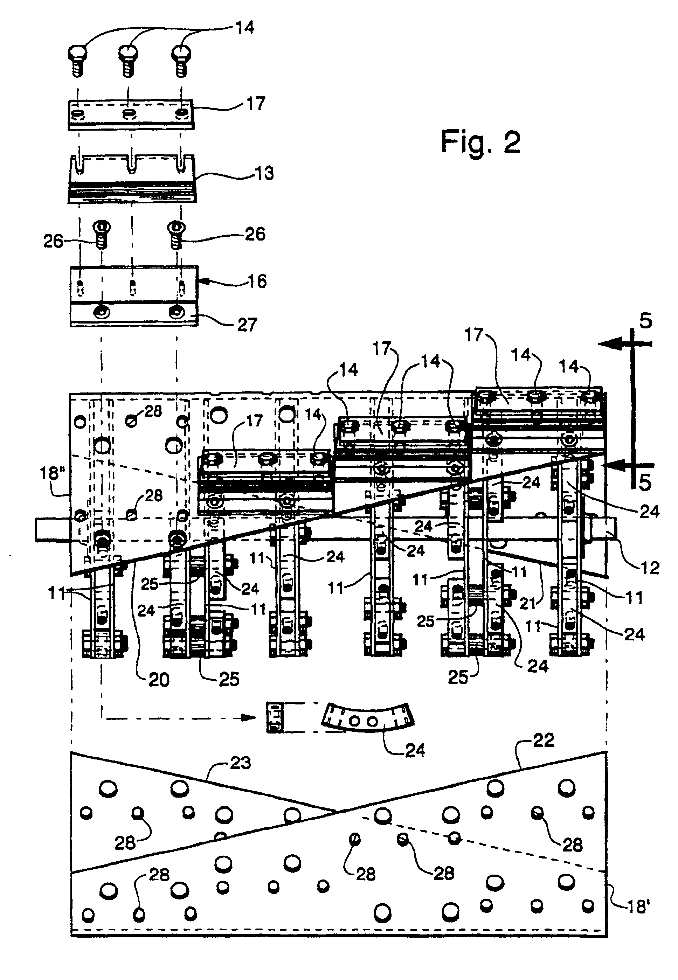

Another well known cutterhead design employs a segmented knife configuration mounted on a hollow cylindrical drum, an example of which is disclosed in US-A-4,061,284. Another example of prior art showing a similar configuration is US-A-4,189,875 in which a perspective view of a segmented knife arrangement mounted on a hollow cylindrical drum is shown at FIG. 2.

It should be noted that insofar as segmented knife configurations are concerned, the simple flat segmented knife design contemplated in the cutterhead shown in US-A-4,061,284, mentioned above, is not uncommon. However, various other knife designs are also known. For example, US-A-4,257,566, which discloses the preamble of claim 1, DK-A-93,543 and SU-A-377,124 disclose bent knife designs used in both segmented and spiral configurations. Another knife design, a curved shape, is shown in US-A-3,357,467 and US-A-3,378,053.

In segmented knife cutterheads, as in all forage harvester cutterheads, the rake angle of the knives is an important design consideration, i.e., the acute angle of the knife relative to crop material being fed across the shear bar. It is desirable to have this angle, which is inclined with respect to the imaginary radial plane mentioned above, maximized to reduce cutting energy, and thus improve efficiency. When flat knives are employed, the incline with respect to the tip path is dictated by the distance of radial protrusion of the knife clamping means, as illustrated by the clamping bolts in the cutterhead shown in US-A-4,061,284. The clamping means must not protrude beyond the cylinder generated by the path of the knife tips, as is also apparent from the spiral design shown in US-A-3,873,038.

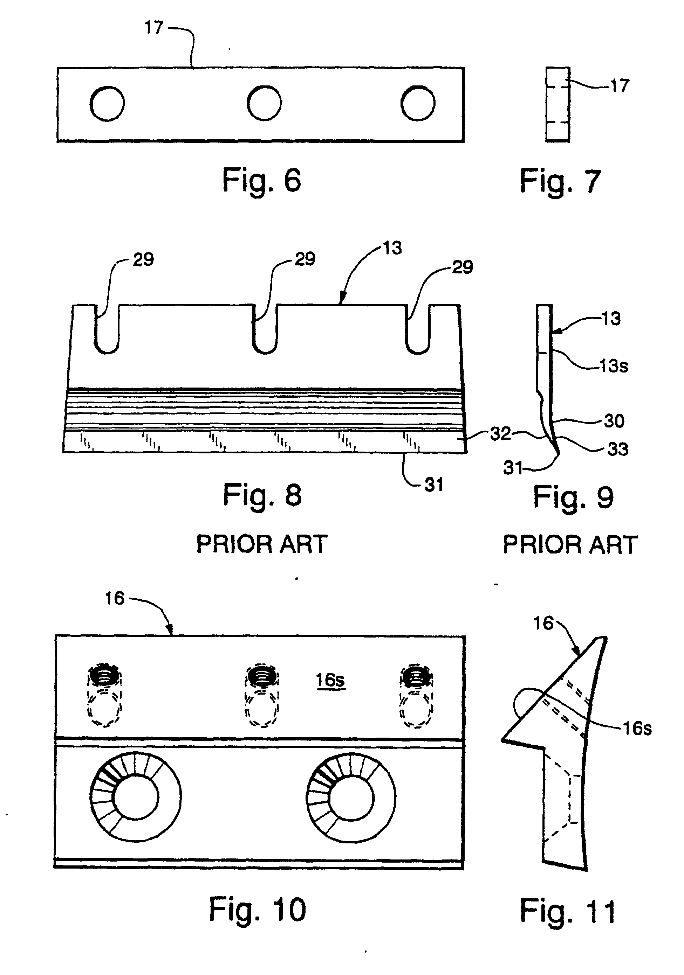

US-A-4,257,566, mentioned above as one example of bent knives, is illustrative of an attempt in the prior art to provide an effective rake angle in a segmented cutterhead in which the knife assemblies are mounted on a drum. Each knife is bent such that the cutting edge is directed radially inward relative to the cylinder generated by such cutting edge. This improves the efficiency and provides clearance for the clamping means, which, in this case, is a series of cap screws along a plate. A similar prior art bent knife design is shown in detail in FIGS. 8 and 9 of the following specification, wherein a portion of the flat bar from which the bent knife is formed is milled away to reduce the thickness prior to bending.

Over the years, operators of forage harvesters have been inclined to favour either segmented knives or spiral knives based on little more than the perception that one or the other is better, based purely on brand preference. Be that as it may, selection of the entire unit in many instances is based solely on cutterhead design, rather than performance. In other instances, the choice of segmented knives is based on the fact that a single knife is more readily set up than a plurality of short knife segments. On the other hand, some prefer segmented knives because damage is limited to short segments rather than a long knife when a large piece of tramp metal finds its way to the cutterhead.

Regardless of the reason, in deference to such perception, farm equipment dealers can best serve their customers by making forage harvesters available with either spiral or segmented knives. In the past when a forage harvester has been converted from segmented knife design to spiral knife design, or visa vera, it has been necessary to interchange one entire assembly for the other. This has proven to be a very costly undertaking, which has left the operator with the dilemma of weighing the cost against his desire for a preferred knife design on a base unit of choice. Having encountered this problem, manufacturers would best serve their customers if a forage harvester could be offered with one cutterhead design that is convertible by dealers to the other design. To satisfy customer needs at the marketplace with an approach of this nature it is also necessary to be aware of the ever present need to provide to the farmer reliable, durable equipment at a reasonable cost.

It is the object of the present invention is to provide an improved, durable segmented knife design for a forage harvester cutterhead that lends itself to simple manufacturing techniques without reducing the efficiency of the cutterhead. Alternate segmented knife assemblies are mounted on a rotatable cutterhead drum and provide rake angles that enhance efficiencies. A further important object of the present invention is to overcome the problems mentioned above by providing simple and reliable apparatus for converting a forage harvester segmented knife cutterhead to a spiral knife cutterhead and vice versa.

The present invention, in one instance, contemplates a forage harvester cutterhead comprising a shaft, a drum assembly having an outer cylindrical surface, and a plurality of knives; each of which has a cutting edge length less than half the axial length of the drum assembly. More particularly, the invention, in this instance, contemplates a plurality of knife support assemblies; each of which comprises a solid support block detachably secured to the outer cylindrical surface of the drum assembly; the support block having either a flat or a curved mounting surface. The support assemblies further comprise fastener means for securing a knife to the mounting surface of the support block with the cutting edge extending in the direction of rotation of the cutterhead and generating a cylinder as the cutterhead rotates; the cylinder having a diameter larger than the diameter of the drum assembly. The knife mounting surface of each knife support assembly extends at an acute angle to a radial plane extending from the shaft through the cutting edge of the associated knife when secured to said mounting surface, and each said knife having a top surface and a bottom surface whereby the rake angle formed by the bottom surface of the knife and said radial plane is greater than the acute angle.

Means are provided for coaxially securing the drum assembly to the cutterhead shaft; said means comprising a plurality of axially spaced disc shaped plate members having substantially the same diameters and affixed in parallel planes transversely along the shaft for rotation therewith, a plurality of mounting members detachably secured to the plate members, the drum assembly having an inner surface having a diameter at least as great as the diameters of the disc shaped plate members, and attachment means for detachably securing the drum assembly to the mounting members. The attachment means further also detachably secure the knife support blocks to the outer surface of the drum assembly.

The foregoing instance, as well as other instances contemplated and other objects, features and advantages of the invention will appear more fully hereinafter from a consideration of the detailed description which follows, in conjunction with the accompanying sheets of drawings wherein principal and alternative embodiments of the invention are illustrated by way of example.

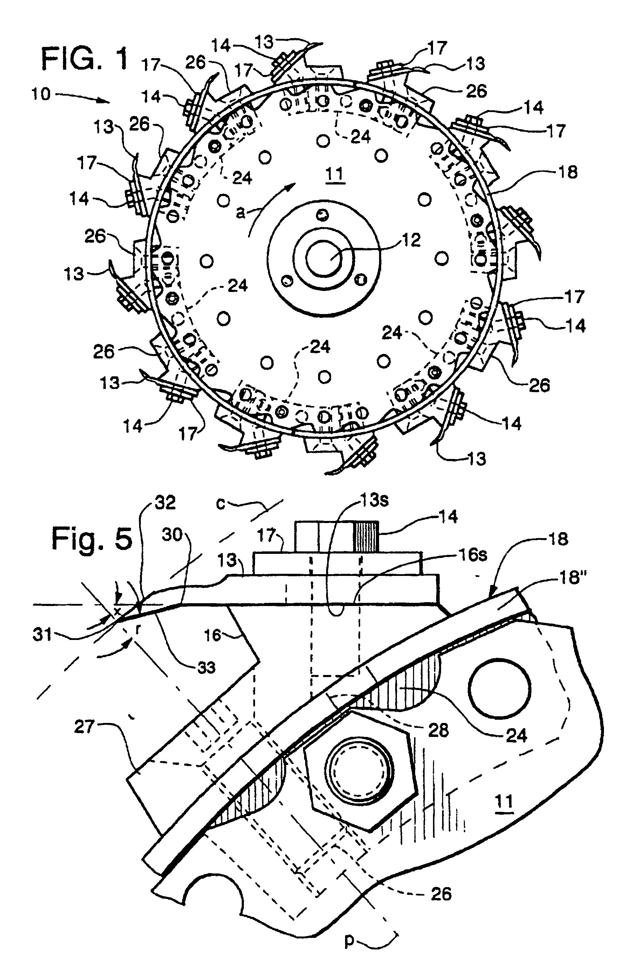

FIG. 1 is an end elevational view of a forage harvester cutterhead having segmented knives mounted on a drum.

FIG. 2 is a diagrammatical top view of the forage harvester cutterhead shown in FIG. 1, and shows several parts in an exploded fashion.

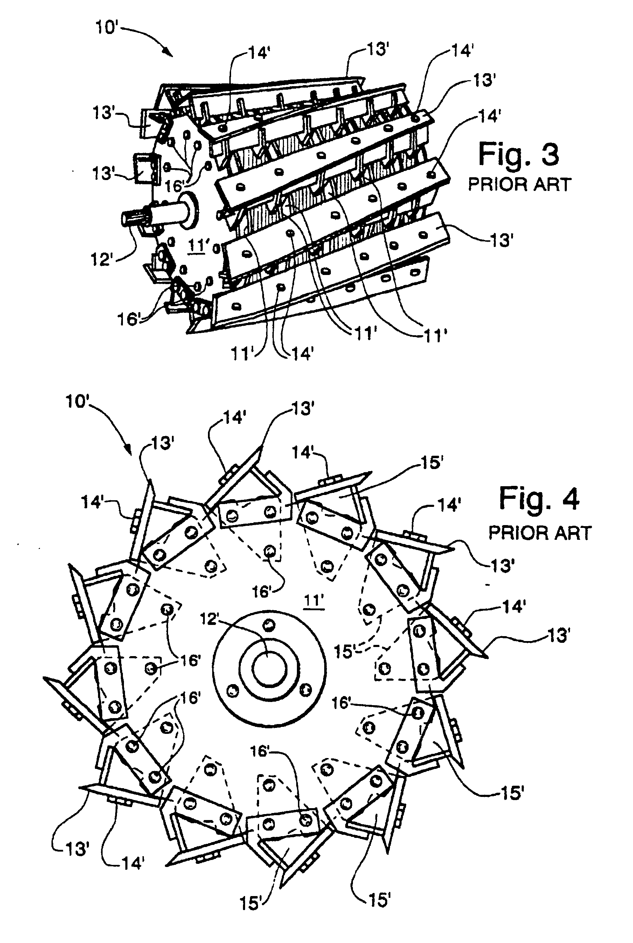

FIG. 3 is a perspective view of a prior art forage harvester cutterhead.

FIG. 4 is an end elevational view of the prior art forage harvester cutterhead shown in FIG. 3.

FIG. 5 is a view taken in the direction of arrows 5-5 in FIG. 2 showing a fragmentary enlargement of a portion of the cutterhead of FIG. 2.

FIG. 6 is a plan view of a clamping plate, one each of which is used with each knife.

FIG. 7 is an end elevational view of the clamping plate shown in FIG. 6.

FIG. 8 is a plan view of a prior art knife design.

FIG. 9 is an end elevational view of the prior art knife shown in FIG. 8.

FIG. 10 is a plan view of a knife support block, one each of which is used in conjunction with a clamping plate to hold each knife in place.

Fig. 11 is an end elevational view of the knife support block shown in FIG. 10.

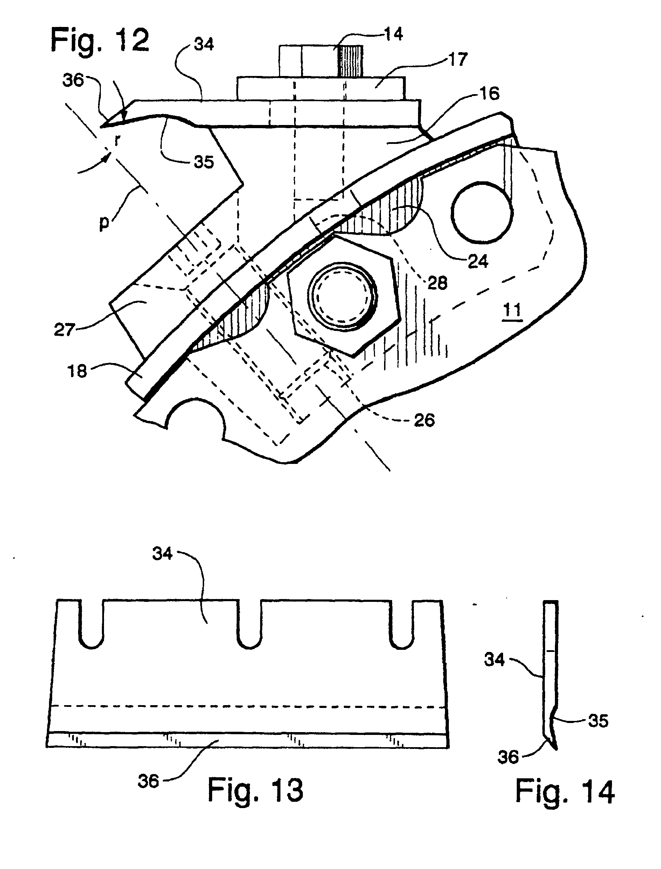

FIG. 12 is a view similar to FIG. 5 showing a fragmentary enlargement of a portion of the cutterhead shown in FIGS. 1 and 2 in which the unique knife design of the present invention is incorporated.

FIG. 13 is a plan view of the knife design shown in FIG. 12.

FIG. 14 is an end elevational view of the knife shown in FIG. 13.

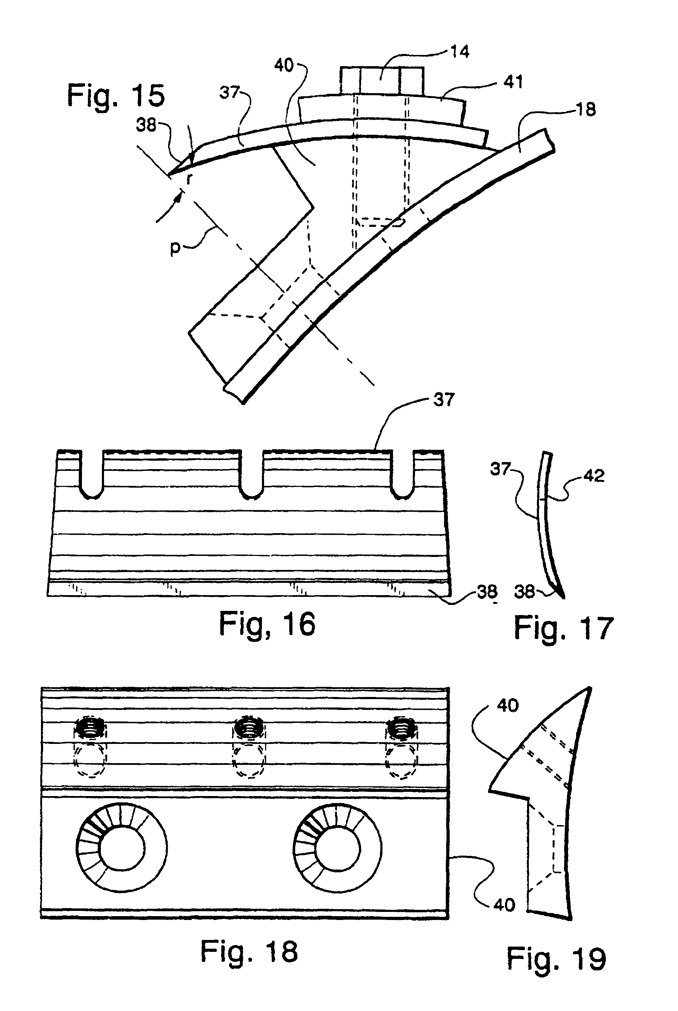

FIG. 15 is a view similar to FIG. 5 showing a fragmentary enlargement of a portion of the cutterhead shown in FIGS. 1 and 2 in which an alternative embodiment of the unique knife design of the present invention is incorporated.

FIG. 16 is a plan view of the knife design shown in FIG. 15.

FIG. 17 is an end elevational view of the knife shown in FIG. 16.

FIG. 18 is a plan view of a modified knife support block, one each of which is used with a modified clamping plate to hold the alternative knives in place, as shown in FIG. 15.

Fig. 19 is an end elevational view of the knife support block shown in FIG. 18.

Referring now to the drawings for a more detailed description of the present invention, FIG. 1 shows the end view of a forage harvester cutterhead, generally designated by reference numeral 10, in which the present invention is embodied. In FIG. 2 a front view of cutterhead 10 is shown in which key parts are depicted in exploded fashion to illustrate the unique manner in which a prior art spiral knife cutterhead is converted to a segmented knife cutterhead. To this end, FIGS. 3 and 4 show a typical prior art spiral knife cutterhead 10' of the type shown in above mentioned US-A-4,209,137, hereby incorporated by reference.

Cutterhead 10' comprises a plurality of disc shaped plate members 11' positioned in axially spaced relationship to each other along a central shaft 12'. Plate members 11' are mounted on shaft 12' by any suitable means such as, for example, splines and keys. Pairs of plate members 11' are equally spaced along the shaft. A plurality of spirally shaped knives 13' are secured outwardly of plate members 11' by clamping bolts 14' screwed into tapped holes in mounting blocks 15' which are affixed to members 11' via bolts 16'.

Turning now to FIG. 2, six pairs of disc shaped plate members 11 are positioned in axially spaced relationship to each other along a central shaft 12. Paired plate members 11 are equally spaced along shaft 12 in the same manner as the paired plates and shaft of the prior art cutterhead depicted in FIGS. 3 and 4. A plurality of segmented knives 13 are secured outwardly of paired plate members 11 by clamping bolts 14 screwed into tapped holes in knife support blocks 16, one of which is shown in FIGS. 10 and 11. A knife clamping plate 17, shown separately in FIGS. 6 and 7, completes the knife support assembly.

A drum 18, interposed between the knife support assemblies and the disc shaped paired plate members 11, comprises a first drum section 18' and a second drum section 18'', which, when assembled form a cylindrical drum having an inner diameter substantially the same as the diameters of disc shaped plate members 11. When drum sections 18' and 18'' are assembled, transverse edge surfaces 20, 21 and 22, 23, respectively, are adjacently diametrically disposed.

A plurality of arcuately shaped mounting blocks 24 are bolted to the outer edges of plate members 11 with the outer curved surfaces of the blocks extending past the outer edges of plate members 11, as shown in FIG. 5. These mounting blocks 24 are mounted between the paired plates 11 in four instances, while in the other two sets, the second innermost from each side, the blocks 24 are mounted outwardly of the paired plates 11 with spacers 25 between the plates 11 aligned with the blocks 24. As also shown in FIG. 5, the entire cutterhead arrangement is secured together by screws 26 which pass through flange portion 27 of knife support blocks 16 and drum 18 and which are snugly secured in tapped holes in mounting blocks 24. Each knife support block 16 is attached to two laterally adjacent mounting blocks 24 and each mounting block 24 receives screws 26 from two circumferentially adjacent knives 13. In the adjacent edge areas of the drum sections 18' and 18'', a mounting block 24 spans from one section to the other and receives screws 26 from two circumferentially adjacent knife support blocks 16. No knife support blocks 16 are mounted across the junctures between the edges 20, 21, 22 and 23 which, due to tolerances, may be slightly uneven. This enables the knifes 13 to be precisely mounted thereby enhancing the sharpening function of their cutting edges which travel in a common cylindrical path. It should also be noted with respect to drum 18 that a series of small holes 28 provide relief for the knife clamping bolts 14 (see FIG. 5).

Although knife 13, adjustably mounted via slots 29 in a well known manner, is shown as having a bent configuration, other designs, such as the straight knife shown in US-A-4,061,284, mentioned above, can also be employed. More particularly, knife 13 is bent at bend 30 along a line generally parallel to cutting edge 31 (see FIGS. 5, 8 and 9). A bent knife design of this general type is well known in the prior art as illustrated by US-A-4,257,566, also mentioned above and hereby incorporated by reference. By further reference to the prior art disclosure of US-A-4,061,284, mentioned above, it is clear that it is well known to the skilled artisan that segmented knife configurations include rows of knives arranged in a side by side fashion over the full surface of a drum with adjacent knives offset along spiral paths. The present invention accommodates segmented knives in this configuration, as shown in the drawings, but is adaptable to accommodate any other configuration that results in a cylindrical knife path.

In operation, the cutterhead 10 comprises an integral part of a forage harvester and is rotated by the power source of the harvester in direction "a" (see FIG. 1) whereupon the cutting edges 31 of the knives 13 generate a cylinder (designated by reference letter "c" in FIG. 5) corresponding to the path of the knives 13 in a well known manner. This path brings the cutting edges 31 of the knives 13 in contact with crop material being fed across an associated fixed shear bar (not shown), disposed with its face surface in an imaginary radial plane, designated by reference letter "p" (see FIG. 5).

Thus, under conditions where cutterhead 10 is rotated in the direction "a", the cutting edges 31 of the knives 13, regardless of design, generate a cylinder "c" corresponding to the path of the tips of the knives 13. The cutting edge 31 is defined by a bevelled edge 32 and the adjacent area 33 (see FIG. 9) of the bottom surface of knife 13. This knife path maintains a rake angle "r" as the knives 13 are rotated into contact with crop material being fed across the above mentioned, associated fixed shear bar (not shown). As shown with respect to the bent knife design illustrated in FIG. 5, the rake angle "r" is the angle between the bottom surface 33 of knife 13 and the imaginary plane "p". The rake angle "r" is greater than angle "x" between the imaginary plane "p" and the coplanar extension of the flat surface bottom portion 13s of the knife 13 whereby the area of impact of the knife on the material being chopped is reduced. This improves the efficiency of the bent knife design relative to a flat knife, which is a well known feature of the bent knife design.

Now turning to knife 34 illustrated in FIGS. 12, 13 and 14, a unique design is provided by machining a flat knife with a relief portion 35 to provide the same desired rake angle "r" without necessitating a bend of the type shown in prior art knife 13, depicted in FIGS. 5 through 9. In knife 34, the cutting edge is also defined by a bevelled potion 36, which provides for similar ease in sharpening as the bent knife design, but obviates the need for a bending operation during formation. In this knife assembly, as in the case of the assembly shown in FIG. 5., clamping bolts 14 do not project beyond the cylindrical path of the knife tips, which is the same as path "c" shown in FIG. 5.

FIGS. 15 through 19 show another knife 37 having a curved configuration which enables the rake angle "r" to be attained without necessitating a bending step during fabrication. The body of knife 37 is curved and has a constant thickness, except for the bevelled edge 38 thereof. The curved knife 37 is supported via a block 40 and a clamping plate 41 on drum 18 by clamping bolts 14 to provide the same rake angle "r" as provided by the arrangement shown in the associated FIGS. 5 and 12. A secure mounting is achieved by providing a radius of curvature on the bottom surface 42 of the curved knife 37 that is slightly less than the radius of the corresponding surface of the support block 40. Likewise, the radius of curvature of the corresponding surface on the clamping plate 41 is slightly less than the curvature of the top surface of the knife 37.

It will be appreciated from what precedes that the unique design of the forage harvester cutterhead 10, which includes the detachable mounting blocks 24, the detachable drum assembly elements 18' and 18'' and the detachable knife support blocks 16 - 40, lends itself for efficiently substituting the segmented knife configuration by a spiral knife configuration with the spiral knives extending across substantially the entire axial length of the cutterhead 10 and vice versa. The knife support blocks 16 - 40 with the knives 13 - 34 or 37 thereon together with the mounting blocks 24 and the drum assembly elements 18', 18'' may readily be replaced by the knife support blocks 15' with the spiral knives 13' thereon.

It is further also conceivable to replace the one piece knife support blocks 15' of the spiral knife configuration cutterhead by two piece supports including inner mounting blocks similar to the mounting blocks 24 and outer knife support blocks similar to the knife support blocks 16 or 40 shown in Figs 1, 2, 5, 10, 11, 12, 15, 18 and 19. This permits an even more readily conversion from the spiral knife configuration to the segmented knife configuration and vice versa to the extent that the mounting blocks 24 can be used in both configurations and thus do not require replacement.

It further also will be appreciated that, on the one hand, in the segmented knife configuration, the drum assembly 18 can be left out, thus providing an open body cutterhead and, on the other hand, in the spiral knife configuration, a drum assembly can be inserted between the knife support blocks and the mounting blocks in case the spiral knife configuration comprises two piece knife supports as described above. This thus provides for a closed body spiral knife configuration cutterhead.

Of the many implicit and explicit advantages of the present invention, one of the most important is the provision of a unique knife assembly for a forage harvester cutterhead having a rotary drum configuration. Also important is the provision of a knife designed to enhance efficiencies of the cutterhead which thereby improves overall operation and customer satisfaction. In the two principle configurations of the knife design, the manufacturing process is simplified and thereby provides additional important advantages.

Another important advantage of the present invention is the provision of a unique design for a forage harvester cutterhead that is readily adaptable for converting a cutterhead having a spiral knife configuration to a segmented knife configuration, and visa versa. It is especially useful in avoiding the need to determine which specific cutterhead design must be opted for at the time of the manufacture of the forage harvester base unit. Customer desires can be subsequently met in an effective and cost effective manner without change to the central supporting structure. Thus, the knives 13' and knife supports 14' can be removed from a forage harvester cutterhead 10', leaving a plurality of disc shaped plate members 11' on shaft 12, whereupon drum 18, knives 13 and knife support blocks 16 - 40 can be secured thereto via mounting blocks 24.

## Claims

1. A forage harvester cutterhead (10) comprising
- a shaft (12);
- a drum assembly (18) provided with means coaxially securing said drum assembly to the shaft (12) and having an outer cylindrical surface;
- a plurality of knives (13/34/37), each of which has a cutting edge length less than half the axial length of the cutterhead (10);
- a plurality of knife support assemblies (16/40) attached to the outer cylindrical surface of the drum assembly (18) and each having a knife mounting surface (16s); and
- fastener means (14, 17/14, 41) for securing a knife (13/34/37) to the mounting surface (16s) of each said knife support assembly (16/40) with the cutting edge (31) of the knife (13/34/37) extending in the direction of rotation (a) of the cutterhead (10) and generating a cylinder (c) as the cutterhead (10) rotates; said cylinder (c) having a diameter larger than the diameter of the drum assembly (18), the knife mounting surface (16s) of each knife support assembly (16/40) extending at an acute angle (x) to a radial plane (p) extending from the shaft (12) through the cutting edge (31) of the associated knife (13) when secured to said mounting surface (16s), and each said knife (13/34/37) having a top surface and a bottom surface whereby the rake angle (r) formed by the bottom surface of each said knife (13/34/37) at the cutting edge (31) thereof and said radial plane (p) is greater than said acute angle (x),
**characterised in that** said means securing said drum assembly (18) include:
- a plurality of axially spaced, disc shaped plate members (11) having substantially the same diameters and affixed in parallel planes transversely along the shaft (12) for rotation therewith;
- a plurality of mounting members (24) secured to the plate members (11); the drum assembly (18) having an inner surface having a diameter at least as great as the diameters of the disc shaped plate members (11); and
attachment means (26) for securing the drum assembly (18) to the mounting members (24).

2. A forage harvester cutterhead (10) according to claim 1, **characterized in that** :
- the mounting surface (16s) of each knife support assembly (16) is flat,
- the bottom surface of each knife (13/34) includes an outer portion (33/35) terminating in the cutting edge (31) of said knife (13) and an inner flat portion (13s) which, when said knife (13) is secured to the corresponding knife support assembly (16/40), extends adjacent to and coplanar with the mounting surface (16s) of said knife support assembly (16), and
- the top surface of each knife (13/34) includes a bevelled surface (32/36) adjacent said cutting edge (31).

3. A forage harvester cutterhead (10) according to claim 2, **characterized in that** the outer portion (33) of the bottom surface of each knife (13) is inclined relative to the inner portion (13s) of said bottom surface from the cutting edge (31) to a line (30) parallel to said cutting edge (31); said line (30) being contiguous with the inner portion (13s) of the bottom surface of the knife (13).

4. A forage harvester cutterhead (10) according to claim 2, **characterized in that** each knife (34) is generally flat with a relief portion (35) being provided in the bottom surface and adjacent the cutting edge thereof; said relief portion (35) being arcuately shaped from the cutting edge to a line parallel to said cutting edge; said line being contiguous with the inner portion of the bottom surface of the knife (13).

5. A forage harvester cutterhead (10) according to any of the claims 2 to 4, **characterized in that** the top surface of the knife (13) includes a flat portion that extends rearwardly from said bevelled surface (32).

6. A forage harvester cutterhead (10) according to claim 1, **characterized in that** :
- the mounting surface of each knife support assembly (40) is curved,
- the bottom surface of each knife (37) conforms to the mounting surface of the corresponding knife support assembly (40) and includes an outer portion terminating in said cutting edge, and
- the top surface of each knife (37) includes a bevelled surface (38) adjacent said cutting edge.

7. A forage harvester cutterhead (10) according to claim 6, **characterized in that** :
- the bottom surface of each knife (37) includes a continuous inner curved portion with a radius of curvature substantially the same as the curved mounting surface of the corresponding knife support assembly (40), and an outer curved portion with substantially the same radius of curvature; said outer portion terminating in said cutting edge, and
- the top surface of each knife (37) includes a curved portion that extends rearwardly from said bevelled surface (38), and has a radius of curvature substantially the same as the bottom surface.

8. A forage harvester cutterhead (10) according to any of the preceding claims, **characterized in that** the fastener means (14, 17/14, 41) include outer portions that extend outwardly from the top surface of the knife (17/34/37) and project within the confines of said cylinder (c).

9. A forage harvester cutterhead (10) according to any of the preceding claims, **characterized in that** each knife support assembly (16/40) is in the form of a solid support block detachably secured to the outer cylindrical surface of the drum assembly (18).

10. A forage harvester cutterhead (10) according to any of the preceding claims, **characterized in that** the attachment means (26) for securing the drum assembly (18) to the mounting members (24) also secure the knife support assemblies (16/40) to the cylindrical outer surface of the drum assembly (18).

11. A forage harvester cutterhead (10) according to any of the preceding claims, **characterized in that** :
- each one of the mounting members (24) has an outwardly facing surface extending at least as far as the circumference of the plate member (11) to which it is secured, and
- the attachment means (26) hold the inner surface of the drum assembly (18) against said outwardly facing surfaces.

12. A forage harvester cutterhead (10) according to claim 11, **characterized in that** the outwardly facing surface of each mounting member (24) has an arcuate shape such that the entire outwardly facing surface engages the drum assembly inner surface.

13. A forage harvester cutterhead (10) according to any of the preceding claims, **characterized in that** the drum assembly (18) is formed from at least two separate parts (18', 18'') having like arcuate cross sections and transverse edge surfaces (20, 21, 22, 23) that are held in contiguous relationship under conditions where the attachment means (26) secure the drum assembly (18) to the mounting members (24).

14. A forage harvester cutterhead (10) according to any of the preceding claims, **characterized in that** the plurality of axially spaced plate members (11) are affixed along the shaft (12) in pairs with at least certain ones of the mounting members (24) being secured between paired plate members (11).

15. A forage harvester cutterhead (10) according to claim 14, **characterized in that** certain ones of the mounting members (24) are secured outwardly of paired plate members (11) with spacers (25) being mounted between said paired plate members (11) in alignment with the mounting members (24).

16. A forage harvester cutterhead (10) according to claim 13 or any of the claims 14 and 15 when appended to claim 13, **characterized in that** the plurality of knife support blocks (16/40) are attached in groups of two or more in side-by-side fashion; the blocks (16/40) in each group being aligned with said contiguous edge surfaces (20, 21, 22, 23).

17. A forage harvester cutterhead (10) according to claim 13 or any of the claims 14 to 16 when appended to claim 13, **characterized in that** :
- the outwardly facing surfaces of certain ones of the mounting members (24) extend across the transverse edge surfaces (20, 21, 22, 23) of the drum assembly parts at the area of contiguous relationship therebetween, and
- the attachment means (26) for securing the drum assembly (18) secure the at least two separate parts of the drum assembly (18) to the same certain ones of the mounting members (24).

18. A forage harvester cutterhead (10) according to any of the preceding claims, **characterized in that** the knife support assemblies (16/40) are directly attached to the mounting members (24) without the interposition of the drum assembly (18) thus forming an open body cutterhead.

19. A forage harvester cutterhead (10) according to any of the preceding claims, **characterized in that** the attachment means (26) detachably secure the drum assembly (18) and/or the knife support assemblies (16/40) to the mounting members (24); the knife support assemblies (16/40) supporting the knives (13/34/37) with a cutting edge length less than half the axial length of the cutterhead, eventually together with the drum assembly (18) and/or the mounting members (24), being substitutable by spiral knife assemblies with a cutting edge length substantially equal to the axial length of the cutterhead (10).

## Patentansprüche

1. Feldhäcksler-Messertrommel (10) mit:
- einer Welle (12);
- einer Trommelbaugruppe (18), die mit die Trommelbaugruppe koaxial an der Welle (12) befestigenden Einrichtungen versehen ist und eine äußere zylindrische Oberfläche aufweist;
- einer Mehrzahl von Messern (13/34/37), die jeweils eine Schneidkantenlänge aufweisen, die kleiner als die halbe axiale Länge der Messertrommel (10) ist;
- einer Mehrzahl von Messerhaltebaugruppen (16/40), die an der äusseren zylindrischen Oberfläche der Trommelbaugruppe (18) befestigt sind und jeweils eine Messerbefestigungsoberfläche (16 s) aufweisen; und
- Befestigungsmitteln (14, 17/14, 41) zur Befestigung eines Messers (13/34/37) an der Befestigungsoberfläche (16s) jeder der Messerhaltebaugruppen (16/40), wobei sich die Schneidkante (31) des Messers (13/34/37) in der Drehrichtung (a) der Messertrommel (10) erstreckt und einen Zylinder ( c ) erzeugt während sich die Messertrommel (10) dreht; wobei der Zylinder (c) einen Durchmesser aufweist, der größer als der Durchmesser der Trommelbaugruppe (18) ist, wobei sich die Messerbefestigungsoberfläche (16 s) jeder Messerhaltebaugruppe (16/40) unter einem spitzen Winkel (x) zu einer radialen Ebene (p) erstreckt, die sich von der Welle (12) durch die Schneidkante (31) des zugehörigen Messers (13) erstreckt, wenn dieses an der Befestigungsoberfläche (16s) befestigt ist, und wobei jedes Messer (13/34/37) eine obere Oberfläche und eine untere Oberfläche aufweist, wobei ein Freiwinkel (r), der von der unteren Oberfläche jedes Messers (13/34/37) an dessen Schneidkante (31) und der radialen Ebene (p) gebildet ist, größer als der spitze Winkel ( x ) ist,
**dadurch gekennzeichnet, dass** die die Trommelbaugruppe (18) befestigenden Einrichtungen folgendes einschließen:
- eine Mehrzahl von mit axialen Abstand angeordneten scheibenförmigen Plattenteilen (11), die im wesentlichen die gleichen Durchmesser aufweisen und in parallelen Ebenen in Querrichtung entlang der Welle (12) für eine Drehung mit dieser befestigt sind;
- eine Mehrzahl von Befestigungsteilen (24), die an den Plattenteilen (11) befestigt sind, wobei die Trommelbaugruppe (18) eine Innenoberfläche mit einem Durchmesser aufweist, der zumindest so groß wie die Durchmesser der scheibenförmigen Plattenteile (11) ist, und
- Befestigungseinrichtungen (26) zur Befestigung der Trommelbaugruppe (18) an den Befestigungsteilen (24).

2. Feldhäcksler-Messertrommel (10) nach Anspruch 1, **dadurch gekennzeichnet, dass**:
- die Befestigungsoberfläche (16s) jeder Messerhaltebaugruppe (16) eben ist,
- die untere Oberfläche jedes Messers (13/34) einen äußeren Abschnitt (33/35), der in der Schneidkante (31) des Messers (13) endet, und einen inneren ebenen Abschnitt (13s) einschließt, der, wenn das Messer (13) an der entsprechenden Messerhaltebaugruppe (16/40) befestigt ist, sich benachbart zu und koplanar zu der Befestigungsoberfläche (16 s) der Messerhaltebaugruppe (16) erstreckt, und
- die obere Oberfläche jedes Messers (13/34) eine abgeschrägte Oberfläche (32/36) benachbart zu der Schneidkante (31) einschließt.

3. Feldhäcksler-Messertrommel (10) nach Anspruch 2, **dadurch gekennzeichnet, dass** der äußere Abschnitt (33) der unteren Oberfläche jedes Messers (13) gegenüber dem inneren Abschnitt (13s) der unteren Oberfläche von der Schneidkante (31) zu einer Linie (30) parallel zu der Schneidkante (31) geneigt ist, wobei die Linie (30) an den inneren Abschnitt (13s) der unteren Oberfläche des Messers (13) angrenzt.

4. Feldhäcksler-Messertrommel (10) nach Anspruch 2, **dadurch gekennzeichnet, dass** jedes Messer (34) allgemein eben ist, wobei ein hinterschnittener Abschnitt (35) in der unteren Oberfläche benachbart zu deren Schneidkante vorgesehen ist; wobei der hinterschnittene Abschnitt (35) bogenförmig von der Schneidkante zu einer Linie parallel zu der Schneidkante geformt ist; wobei die Linie an den inneren Abschnitt der unteren Oberfläche des Messers (13) angrenzt.

5. Feldhäcksler-Messertrommel (10) nach einem der Ansprüche 2 bis 4, **dadurch gekennzeichnet, dass** die obere Oberfläche des Messers (13) einen ebenen Abschnitt einschließt, der sich von der abgeschrägten Oberfläche (32) aus nach hinten erstreckt.

6. Feldhäcksler-Messertrommel (10) nach Anspruch 1, **dadurch gekennzeichnet, dass**:
- die Befestigungsoberfläche jeder Messerhaltebaugruppe (40) gekrümmt ist,
- die untere Oberfläche jedes Messers (37) in ihrer Form an die Befestigungsoberfläche der entsprechenden Messerhaltebaugruppe (40) angepasst ist und einen äußeren Abschnitt einschließt, der in der Schneidkante endet, und
- die obere Oberfläche jedes Messers (37) eine abgeschrägte Oberfläche (38) benachbart zu der Schneidkante einschließt.

7. Feldhäcksler-Messertrommel (10) nach Anspruch 6, **dadurch gekennzeichnet, dass**:
- die untere Oberfläche jedes Messers (37) einen kontinuierlichen gekrümmten Abschnitt mit einem Krümmungsradius, der im wesentlichen gleich dem der gekrümmten Befestigungsoberfläche der entsprechenden Messerhaltebaugruppe (40) ist, und einen äußeren gekrümmten Abschnitt mit im wesentlichen dem gleichen Krümmungsradius einschließt, wobei der äußere Abschnitt in der Schneidkante endet, und
- die obere Oberfläche jedes Messers (37) einen gekrümmten Abschnitt einschließt, der sich von der abgeschrägten Oberfläche (38) aus nach hinten erstreckt und einen Krümmungsradius aufweist, der im wesentlichen gleich dem der unteren Oberfläche ist.

8. Feldhäcksler-Messertrommel (10) nach einem der vorhergehenden Ansprüche, **dadurch gekennzeichnet, dass** die Befestigungsmittel (14, 17/14, 41) äußere Abschnitte einschließen, die sich von der oberen Oberfläche des Messers (17/34/37) aus nach außen erstrecken und innerhalb der Begrenzungen des Zylinders (c) vorspringen.

9. Feldhäcksler-Messertrommel (10) nach einem der vorhergehenden Ansprüche, **dadurch gekennzeichnet, dass** jede Messerhaltebaugruppe (16/40) die Form eines massiven Halteblockes aufweist, der lösbar an der äußeren zylindrischen Oberfläche der Trommelbaugruppe (18) befestigt ist.

10. Feldhäcksler-Messertrommel (10) nach einem der vorhergehenden Ansprüche, **dadurch gekennzeichnet, dass** die Befestigungseinrichtungen (26) zur Befestigung der Trommelbaugruppe (18) an den Befestigungsteilen (24) weiterhin die Messerhaltebaugruppen (16/40) an der zylindrischen Aussenoberfläche der Trommelbaugruppe (18) befestigen.

11. Feldhäcksler-Messertrommel (10) nach einem der vorhergehenden Ansprüche, **dadurch gekennzeichnet, dass**:
- jedes der Befestigungsteile (24) eine nach außen gerichtete Oberfläche aufweist, die sich zumindest soweit erstreckt, wie der Umfang des Plattenteils (11), an dem es befestigt ist und,
- die Befestigungsmittel (26) die Innenoberfläche der Trommelbaugruppe (18) gegen die nach außen gerichteten Oberflächen halten.

12. Feldhäcksler-Messertrommel (10) nach Anspruch 11, **dadurch gekennzeichnet, dass** die nach außen gerichtete Oberfläche jedes Befestigungsteils (24) eine bogenförmige Form derart ausweist, das die gesamte nach außen gerichtete Oberfläche mit der Innenoberfläche der Trommelbaugruppe in Eingriff steht.

13. Feldhäcksler-Messertrommel (10) nach einem der vorhergehenden Ansprüche, **dadurch gekennzeichnet, dass** die Trommelbaugruppe (18) aus zumindest zwei getrennten Teilen (18', 18") gebildet ist, die gleiche bogenförmige Querschnitte und querverlaufende Kantenoberflächen (20, 21, 22, 23) aufweisen, die in angrenzender Beziehung unter Bedingungen gehalten werden, unter denen die Befestigungsmittel (26) die Trommelbaugruppe (18) an den Befestigungsteilen (26) befestigen.

14. Feldhäcksler-Messertrommel (10) nach einem der vorhergehenden Ansprüche, **dadurch gekennzeichnet, dass** die Mehrzahl der mit axialen Abstand angeordneten Plattenteile (11) entlang der Welle (12) in Paaren befestigt sind, wobei zumindest einige der Befestigungsteile (24) zwischen paarweise angeordneten Plattenteilen (11) befestigt sind.

15. Feldhäcksler-Messertrommel (10) nach Anspruch 14, **dadurch gekennzeichnet, dass** bestimmte der Befestigungsteile (24) auf der Außenseite der paarweise angeordneten Plattenteile (11) befestigt sind, wobei Abstandstücke (25) zwischen den paarweise angeordneten Plattenteilen (11) in Ausrichtung mit den Befestigungsteilen (24) befestigt sind.

16. Feldhäcksler-Messertrommel (10) nach Anspruch 13 oder einem der Ansprüche 14 und 15 unter Rückbeziehung auf Anspruch 13, **dadurch gekennzeichnet, dass** die Mehrzahl der Messerhalteblöcke (16/40) in Gruppen von zwei oder mehr Seite an Seite befestigt sind; wobei die Blöcke (16/40) in jeder Gruppe mit den angrenzenden Kantenoberflächen (20, 21, 22, 23) ausgerichtet sind.

17. Feldhäcksler-Messertrommel (10) nach Anspruch 13 oder einem der Ansprüche 14 bis 16 unter Rückbeziehung auf Anspruch 13, **dadurch gekennzeichnet, dass**:
- die nach außen gerichteten Oberflächen bestimmter der Befestigungsteile (24) sich über die querverlaufenden Kantenoberflächen (20, 21, 22, 23) der Trommelbaugruppenteile an dem Bereich der aneinander angrenzenden Beziehung zwischen diesen erstrecken, und
- die Befestigungsmittel (26) zur Befestigung der Trommelbaugruppe (18) die zumindest zwei getrennten Teile der Trommelbaugruppe (18) an dem gleichen bestimmten der Befestigungsmittel (24) befestigen.

18. Feldhäcksler-Messertrommel (10) nach einem der vorhergehenden Ansprüche, **dadurch gekennzeichnet, dass** die Messerhaltebaugruppen (16/40) direkt an den Befestigungsteilen (24) ohne Einfügung der Trommelbaugruppe (18) befestigt sind, wodurch eine Messertrommel mit offenen Körper gebildet wird.

19. Feldhäcksler-Messertrommel (10) nach einem der vorhergehenden Ansprüche, **dadurch gekennzeichnet, dass** die Befestigungsmittel (26) die Trommelbaugruppe (18) und / oder die Messerhaltebaugruppen (16/40) lösbar an den Befestigungsteilen (24) befestigen, wobei die Messerhaltebaugruppen (16/40), die die Messer (13/34/37) mit einer Schneidkantenlänge von weniger als der halben axialen Länge der Messertrommel befestigen, gegebenenfalls zusammen mit der Trommelbaugruppe (18) und/oder den Befestigungsteilen (14) durch spiralförmige Messerbaugruppen mit einer Schneidkantenlänge ersetzbar sind, die im wesentlichen gleich der axialen Länge der Messertrommel (10) ist.

## Revendications

1. Tête de coupe d'ensileuse (10) comprenant
- un arbre (12);
- un assemblage de tambour (18) équipé de moyens fixant coaxialement ledit assemblage de tambour sur l'arbre (12) et possédant une surface extérieure cylindrique;
- une pluralité de couteaux (13/34/37), chacun possédant une longueur d'arête de coupe inférieure à la moitié de la longueur axiale de la tête de coupe (10);
- une pluralité d'assemblages de support de couteaux (16/40) attachés à la surface extérieure de l'assemblage de tambour (18) et possédant chacun une surface de montage de couteau (16s); et
- des moyens de fixation (14, 17/14, 41) destinés à fixer un couteau (13/34/37) sur la surface de montage (16s) de chaque assemblage de support de couteau (16/40) avec l'arête de coupe (31) du couteau (13/34/37) s'étendant dans le sens de rotation (a) de la tête de coupe (10) et générant un cylindre (c) lorsque la tête de coupe (10) tourne; ledit cylindre (c) ayant un diamètre supérieur au diamètre de l'assemblage de cylindre (18), la surface de montage de couteau (16s) de chaque assemblage de support de couteau (16/40) étant disposée suivant un angle aigu (x) par rapport au plan radial (p) passant par l'arbre (12) et l'arête de coupe (31) du couteau associé (13) lorsque ce dernier est fixé sur ladite surface de montage (16s), et chaque dit couteau (13/34/37) possédant une surface supérieure et une surface inférieure de sorte que l'angle de coupe (r) formé par la surface inférieure de chaque dit couteau (13/34/37) au niveau de son arête de coupe (31) et ledit plan radial (p) est supérieur audit angle aigu (x),
**caractérisée en ce que** lesdits moyens de fixation dudit assemblage de tambour (18) comprennent:
- une pluralité d'éléments de plaques discoïdes (11) espacés axialement ayant substantiellement les mêmes diamètres et fixés transversalement sur l'arbre (12) dans des plans parallèles afin de tourner avec ce dernier;
- une pluralité d'éléments de montage (24) fixés aux éléments de plaques (11); l'assemblage de tambour (18) possédant une surface intérieure dont le diamètre est au moins aussi grand que les diamètres des éléments de plaques discoïdes (11); et
des moyens de fixation (26) destinés à fixer l'assemblage de tambour (18) sur les éléments de montage (24).

2. Tête de coupe d'ensileuse (10) selon la revendication 1, **caractérisée en ce que** :
- la surface de montage (16s) de chaque assemblage de support de couteau (16) est plane,
- la surface inférieure de chaque couteau (13/34) comprend une portion extérieure (33/35) se terminant par l'arête de coupe (31) dudit couteau (13) et une portion intérieure plane (13s) s'étendant à proximité de la surface de montage (16s) dudit assemblage de support de couteau (16) lorsque ledit couteau (13) est fixé à l'assemblage correspondant de support de couteau (16/40), et
- la surface supérieure de chaque couteau (13/34) comprend une surface biseautée (32/36) adjacente à ladite arête de coupe (31).

3. Tête de coupe d'ensileuse (10) selon la revendication 2, **caractérisée en ce que** la portion extérieure (33) de la surface inférieure de chaque couteau (13) est inclinée par rapport à la portion intérieure (13s) de ladite surface inférieure, depuis l'arête de coupe (31) vers une ligne parallèle (30) à ladite arête de coupe (31); ladite ligne (30) étant contiguë de la portion intérieure (13s) de la surface inférieure du couteau (13).

4. Tête de coupe d'ensileuse (10) selon la revendication 2, **caractérisée en ce que** chaque couteau (34) est généralement plan avec une portion évidée (35) prévue à la surface inférieure et adjacente de son arête de coupe; ladite portion évidée (35) étant de forme arquée à partir de l'arête de coupe vers une ligne parallèle à ladite arête de coupe; ladite ligne étant contiguë à la portion intérieure de la surface inférieure du couteau (13).

5. Tête de coupe d'ensileuse (10) selon l'une quelconque des revendications 2 à 4, **caractérisée en ce que** la surface supérieure du couteau (13) comprend une portion plane s'étendant vers l'arrière à partir de ladite surface biseautée (32).

6. Tête de coupe d'ensileuse (10) selon la revendication 1, **caractérisée en ce que** :
- la surface de montage de chaque assemblage de support de couteau (40) est incurvée,
- la surface inférieure de chaque couteau (37) s'adapte à la surface de montage de l'assemblage correspondant de support de couteau (40) et comprend une portion extérieure se terminant par ladite arête de coupe, et
- la surface supérieure de chaque couteau (37) comprend une surface biseautée (38) adjacente de ladite arête de coupe.

7. Tête de coupe d'ensileuse (10) selon la revendication 6, **caractérisée en ce que** :
- la surface inférieure de chaque couteau (37) comprend une portion intérieure continue et incurvée dont le rayon de courbure est substantiellement identique à celui de la surface de montage incurvée de l'assemblage correspondant de couteau (40), et une portion extérieure incurvée dont le rayon de courbure est substantiellement identique; ladite portion extérieure se terminant par ladite arête de coupe, et
- la surface supérieure de chaque couteau (37) comprend une portion incurvée s'étendant vers l'arrière à partir de ladite surface biseautée (38), et possède un rayon de courbure substantiellement identique à celui de la surface inférieure.

8. Tête de coupe d'ensileuse (10) selon l'une quelconque des revendications précédentes, **caractérisée en ce que** les moyens de fixation (14, 17/14, 41) comprennent des portions extérieures s'étendant vers l'arrière à partir de la surface supérieure du couteau (17/34/37) et se prolongent au sein des limites dudit cylindre (c).

9. Tête de coupe d'ensileuse (10) selon l'une quelconque des revendications précédentes, **caractérisée en ce que** chaque assemblage de support de couteau (16/40) a la forme d'un bloc de support solide fixé amoviblement à la surface cylindrique extérieure de l'assemblage de tambour (18).

10. Tête de coupe d'ensileuse (10) selon l'une quelconque des revendications précédentes, **caractérisée en ce que** les moyens de fixation (26) destinés à fixer l'assemblage de tambour (18) aux éléments de montage (24) fixent également les assemblages de support de couteau (16/40) à la surface cylindrique extérieure de l'assemblage de tambour (18).

11. Tête de coupe d'ensileuse (10) selon l'une quelconque des revendications précédentes, **caractérisée en ce que** :
- chacun des éléments de montage (24) possède une surface dirigée vers l'extérieur s'étendant au moins aussi loin que la circonférence de l'élément de plaque (11) auquel il est fixé, et
- les moyens de fixation (26) maintiennent la surface intérieure de l'assemblage de tambour (18) contre lesdites surfaces dirigées vers l'extérieur.

12. Tête de coupe d'ensileuse (10) selon la revendication 11, **caractérisée en ce que** la surface dirigée vers l'extérieur de chaque élément de montage (24) possède une forme arquée de telle sorte que l'ensemble de la surface dirigée vers l'extérieur entre en contact avec la surface intérieure de l'assemblage de tambour.

13. Tête de coupe d'ensileuse (10) selon l'une quelconque des revendications précédentes, **caractérisée en ce que** l'assemblage de tambour (18) est constitué d'au moins deux pièces séparées (18', 18'') ayant des sections transversales arquées et des surfaces de bord transversal (20, 21, 22, 23) semblables qui sont maintenues en relation contiguë dans la situation où les moyens de fixation (26) fixent l'assemblage de tambour (18) aux éléments de montage (24).

14. Tête de coupe d'ensileuse (10) selon l'une quelconque des revendications précédentes, **caractérisée en ce que** la pluralité d'éléments de plaques espacés axialement (11) sont fixés le long de l'arbre (12) par paires avec au moins certains des éléments de montage (24) fixés entre des éléments appariés de plaques (11).

15. Tête de coupe d'ensileuse (10) selon la revendication 14, **caractérisée en ce que** certains des éléments de montage (24) sont fixés à l'extérieur des éléments appariés de plaques (11) avec des entretoises (25) montées entre lesdits éléments appariés de plaques (11) en alignement avec les éléments de montage (24).

16. Tête de coupe d'ensileuse (10) selon la revendication 13 ou l'une quelconque des revendications 14 et 15 lorsqu'elles se rapportent à la revendication 13, **caractérisée en ce que** la pluralité de blocs de support de couteaux (16/40) est fixée côte à côte en groupes de deux ou plus; les blocs (16/40) de chaque groupe étant alignés avec lesdites surfaces contiguës de bord (20, 21, 22, 23).

17. Tête de coupe d'ensileuse (10) selon la revendication 13 l'une quelconque des revendications 14 à 16 lorsqu'elles se rapportent à la revendication 13, **caractérisée en ce que**:
- les surfaces dirigées vers l'extérieur de certains des éléments de montage (24) s'étendent en travers des surfaces de bord transversal (20, 21, 22, 23) des pièces d'assemblage de tambour au niveau de la zone de relation contiguë entre elles, et
- les moyens de fixation (26) destinés à fixer l'assemblage de tambour (18) fixent au moins deux pièces séparées de l'assemblage de tambour (18) aux mêmes certains éléments de montage (24).

18. Tête de coupe d'ensileuse (10) selon l'une quelconque des revendications précédentes, **caractérisée en ce que** les assemblages de support de couteaux (16/40) sont attachés directement aux éléments de montage (24) sans l'interposition de l'assemblage de tambour (18) pour former ainsi une tête de coupe à châssis ouvert.

19. Tête de coupe d'ensileuse (10) selon l'une quelconque des revendications précédentes, **caractérisée en ce que** les moyens de fixation (26) fixent amoviblement l'assemblage de tambour (18) et/ou les assemblages de support de couteaux (16/40) aux éléments de montage (24); les assemblages de support de couteaux (16/40) soutenant les couteaux (13/34/37) avec une longueur d'arête de coupe inférieure à la moitié de la longueur axiale de la tête de coupe, éventuellement en combinaison avec l'assemblage de tambour (18) et/ou les éléments de montage (24), en pouvant être substitués par des assemblages de couteaux en spirale dont la longueur d'arête de coupe est substantiellement égale à la longueur axiale de la tête de coupe (10).
